# EUROPÄISCHE PATENTANMELDUNG

(11) **EP 0 731 300 A1**
(43) Veröffentlichungstag der Anmeldung: **11.09.1996**
(21) Anmeldenummer: 96101093.1
(22) Anmeldetag: 26.01.1996
(51) Int. Cl.: F16J 9/26

(54) **Kolbenring für Verbrennungskraftmaschinen mit einer verschleissfesten Beschichtung**

(30) Priorität: 09.03.1995 DE 19508419
(71) Anmelder: AE GOETZE GmbH, D-51399 Burscheid (DE)
(72) Erfinder: Linde, Rudolf, D-51399 Burscheid (DE); Dürdoth, Stefan, D-51399 Burscheid (DE); Buran, Ulrich, Dipl.-Ing., D-51399 Burscheid (DE)

(57) **Zusammenfassung**

Ein Kolbenring für Verbrennungskraftmaschinen ist auf seiner Lauffläche am Außenumfang, auf seinem Innenumfang und/oder den Flankenflächen mit Verschleißschutzschichten aus galvanisch abgeschiedenem Eisen versehen, welche eingelagert harte Bestandteile enthält, die aus während der Abscheidung gebildeten Eisenhydriden, Eisenphosphiden und/oder Eisenboriden sowie gegebenenfalls aus bei der Abscheidung gebildeten Eisenlegierungen und/oder während der Abscheidung eindispergierten Hartstoffteilchen oder Festschmierstoffteilchen bestehen.

## Beschreibung

Die Erfindung betrifft einen Kolbenring für Verbrennungskraftmaschinen mit einer verschleißfesten Beschichtung auf dem Außenumfang, dem Innenumfang und/oder den Flankenflächen aus einer galvanisch abgeschiedenen Schicht.

Kolbenringe für Verbrennungskraftmaschinen bestehen bevorzugt aus Gußeisen oder Stahl und es ist entsprechend dem Anwendungsfall bekannt, die Kolbenringe aufihren Laufflächen und erforderlichenfalls auch auf den Flankenflächen und dem Innenumfang mit verschleißfesten Beschichtungen zu versehen. Bewährt haben sich Verschleißschutzschichten aus thermisch aufgespritzten Molybdän oder Metallkeramik, Nitrier- oder Nitrocarborierschichten sowie galvanisch abgeschiedenen Hartchromschichten.

Thermische Spritzschichten werden nach aufwendigem Verfahren hergestellt, so daß ihr Einsatz nur bei hoch belasteten Kolbenringen wirtschaftlich ist. Nitrierschichten und Nitrocarborierschichten sind abhängig von der verwendeten Kolbenringlegierung und der Legierung des Gegenlaufpartners nicht universell bei jedem Kolbenring anwendbar.

Galvanisch abgeschiedene Hartchromschichten auf Kolbenringen werden in der Summe ihrer positiven Eigenschaften beim Einsatz in Verbrennungskraftmaschinen bisher noch von keiner anderen Beschichtung übertroffen. Die Herstellung der galvanischen Chromschichten erfolgt aus Elektrolyten mit überwiegend sechswertigen Chromverbindungen. Diese besitzen im Vergleich zu anderen galvanischen Elektrolyten einen niedrigen kathodischen Wirkungsgrad mit entsprechend hohem Energieverbrauch und Verlusten bei gleichzeitig starker Wasserstoffentwicklung. Zusätzlich sind Chromelektrolyte stark toxisch, so daß der Betrieb von Chromelektrolyten nur unter verteuernden hohen Arbeits- und Umweltschutzauflagen möglich ist.

Versuche galvanische Chromschichten auf Kolbenringen durch galvanische Schichten aus anderen Metallen oder Metallegierungen zu ersetzen blieben bis heute erfolglos. Bewährt haben sich in der Praxis lediglich galvanisch abgeschiedene weiche Metallschichten, aus beispielsweise Zinn, Nickel oder Kupfer, die jedoch nur das Einlaufverhalten der Kolbenringe im Motor optimieren, indem sie beim Einlauf im Motor sich relativ schnell verschleißen.

Der vorliegenden Erfindung liegt daher die Aufgabe zugrunde einen Kolbenring gemäß Oberbegriff des Hauptpatentanspruchs zu schaffen, welcher bei einfacher, betriebsicherer und wirtschaftlicher Herstellbarkeit im Betrieb in Verbrennungskraftmaschinen zu mit galvanischen Hartchromschichten herkömmlich versehenen Kolbenringen vergleichbare optimale Eigenschaften besitzt.

Erfindungsgemäß wird diese Aufgabe durch einen Kolbenring gemäß Oberbegriff des Hauptpatentanspruchs gelöst, dessen Verschleißschutzschicht aus einer galvanisch abgeschiedenen Eisenschicht besteht, welche eingelagerte harte Bestandteile enthält.

Gefunden wurde, daß solche harten Bestandteile aus Eisenhydriden bestehen können, die sich bei Einstellung der chemischen Zusammensetzung des Eisenelektrolyten und Einstellung der Abscheidungsparameter (Temperatur, Stromdichte) auf einen niedrigen kathodischen Wirkungsgrad aus dem dabei vermehrt entstehenden Wasserstoff und dem Eisen bilden und sich in das Metallgitter des sich abscheidenden Eisens einlagern. Die dabei entstehenden Änderungen des Metallgitters erzeugen eine Eisenschicht mit hoher Härte und entsprechend hoher Verschleißfestigkeit und es wurde in Motorversuchen gefunden, daß die gebildete Eisenschicht hinsichtlich ihrer Verschleißfestigkeit bessere Eigenschaften als ein unbeschichteter Kolbenring aufwies, die jedoch noch nicht einer Verschleißschutzschicht aus galvanisch abgeschiedenem Hartchrom gleichkam.

Es wurde weiter gefunden, daß die Verschleißfestigkeit der Eisenschicht durch eingelagerte Eisenphosphide und/oder Eisenboride als harte Bestandteile ähnlich gesteigert werden kann. In diesem Fall werden den Eisenelektrolyten Alkaliphosphite und oder Natriumborhydrid und/oder Boride zugesetzt, so daß sich bei der Eisenabscheidung gleichzeitig Phosphor und/oder Bor bildet, das mit dem Eisen zu Phosphiden beziehungsweise Boriden reagiert und sich in der Eisenschicht als harter Bestandteil ablagert. Eine weitere Steigerung der Verschleißwerte der Eisenschicht kann erzielt werden, wenn in der Eisenschicht kombiniert Eisenhydride zusammen mit Eisenphophiden und/oder Eisenboriden eingelagert werden.

Im Sinne der Erfindung ist es weiter möglich aus dem Eisenelektrolyten gleichzeitig auch weitere Metalle wie Nickel, Molybdän, Wolfgram, Kobalt und/oder Vanadin abzuscheiden, so daß sich eine galvanisch abgeschiedene Eisenlegierungsschicht bildet, deren Verschleißfestigkeit entsprechend der Zusammensetzung gesteigert ist.

Im Sinne der Erfindung können die galvanisch abgeschiedenen Eisenschichten auch als Eisendispersionsschichten hergestellt sein, bei denen als harte Bestandteile in der Eisenschicht Hartstoffteilchen aus vor allem Aluminiumoxid, Siliziumkarbid, Siliziumnitrid, Borkarbid, Titandioxid, Zirkonoxid und/oder Diamantpulver eingelagert sind. Im Sinne der Erfindung können die eingelagerten Teilchen dabei auch aus Festschmierstoffteilchen wie insbesondere aus Graphit, Molybdändisulfid oder Bornitrid bestehen.

In Motorversuchen wurde gefunden, daß die mit den erfindungsgemäßen Eisenschichten versehenen Kolbenringe eine hohe Lenbensdauer aufweisen. Die Härtewerte und Verschleißfestigkeitswerte der erfindungsgemäßen Kolbenringbeschichtungen waren gegenüber herkömmlich aus üblichen Eisensulfatelektrolyten hergestellten wesentlich verbessert und entsprachen entsprechend der Einstellung den von überlicherweise verwendeten Hartchromschichten. Dem Fachmann steht es dabei frei entsprechend den Anforderungen des Kolbenringes im motorischen Betrieb die zu verwendenden und in die Eisenschicht einzulagernden harten Bestandteile auszuwählen, wobei die erfindungsgemäß zu verwendenden harten Bestandteile einzeln oder in Kombination miteinander ausgewählt werden können. Vorteilhaft ist vor allem die wirtschaftliche Herstellbarkeit der erfindungsgemäßen Kolbenringe. Eisenelektrolyten sind allenfalls nur gering toxisch, so daß die Eisenelektrolyten ohne aufwendige Arbeitsschutzauflagen betriebssicher gehandhabt werden können. Größere Materialkosten entstehen dabei nicht und Rückstände sind relativ unproblematisch zu entsorgen.

Die Erfindung wird durch die Anwendungsbeispiele näher erläutert.

### Beispiel 1

Zum Vergleich wurde eine herkömmliche Eisenschicht aus einem bekannten Eisensulfatelektrolyten auf einen Kolbenring abgeschieden. Die Härte der Schicht betrug im Mittel 435 HV 0,1.
Im Motorlauf wies die Schicht nach kurzer Zeit einen hohen Eigenverschleiß auf, so daß ein derartig beschichteter Kolbenring zum Betrieb in einer Verbrennungskraftmaschine nicht geeignet war.

### Beispiel 2

Der Eisenelektrolyt aus Beispiel 1 wurde durch Änderung der Stromdichte und der Temperatur so modifiziert, daß im Kristallgitter der Eisenschicht gleichzeitig Wasserstoff unter Bildung von Eisenhydrid abgeschieden wurde.

Die Härte der Eisenschicht betrug im Mittel 665 HV 0,1. Im Motortestlauf wies ein derartig beschichteter Kolbenring einen wesentlich geringeren Eigenverschleiß auf, der jedoch noch nicht etwa dem von herkömmlichen Hartchromschichten auf Kolbenringen gleichkam.

### Beispiel 3

Dem Eisenelektrolyten aus Beispiel 2 wurde zusätzlich Alkaliphosphit zugesetzt, so daß sich in der abgeschiedenen Eisenschicht neben Eiserhydriden Eisenphosphide als harte Stoffe einlagerten.

Der Phosphorgehalt der Eisenschicht betrug 3 Gewichtsprozent und die Härte der Schicht lag im Mittel bei 830 HV 0,1. Durch eine Wärmebehandlung während zwei Stunden bei 400° C wurde die Schichthärte auf 980 HV 0,1 gesteigert. Im Motortest wiesen die mit dieser Eisenphosphorschicht versehenen Kolbenringe Verschleißraten auf, die etwa den von mit thermischen Molybdänspritzschichten versehenen Kolbenringen entsprachen.

### Beispiel 4

Den Eisenelektrolyten des Beispiels 2 wurden zusätzlich Molybdänverbindungen zugesetzt, so daß beim Abschieden eine Eisenmolybdänlegierungsschicht mit etwa 4 Gewichtsprozent Molybdän und eingelagerten Eisenhydriden gebildet wurde.

Die Härte der Schicht betrug im Mittel 750 HV 0,1 und die derartig beschichteten Ringe ergaben im Motortest ein Verschleißverhalten wie die Kolbenringe aus Beispiel 3.

### Beispiel 5

In den Eisenelektrolyten des Beispiels 3 wurden zusätzlich fein dispergierte Hartstoffe zugegeben, so daß eine Eisenschicht abgeschieden wurde, welche außer Eisenhydriden und Eisenphosphiden feindispergiert Hartstoffe enthielt.

Als Hartstoff wurde in diesem Fall Aluminiumoxid mit einer Teilchengröße zwischen 0,001 und 0.003 mm verwendet.

Die Einlagerungsrate des Dispersanten in der Eisenschicht betrug 8 Gewichtsprozent bei einem Phosphorgehalt von 3 Gewichtsprozent.

Die Härte der Schicht betrug im Mittel 900 HV 0,1 und konnte durch eine zweistündige Wärmebehandlung bei 400° C auf 1100 HV 0,1 gesteigert werden.

Im Motortest wies der mit dieser Schicht versehene Kolbenring Verschleißraten auf, die den von mit galvanischen Hartchromschichten versehenen Kolbenringen entsprachen.

## Patentansprüche

1. Kolbenring für eine Verbrennungskraftmaschine mit einer verschleißfesten Beschichtung auf der Lauffläche am Außenumfang, auf dem Innenumfang und/oder den Flankenflächen aus einer galvanisch abgeschiedenen Schicht, dadurch gekennzeichnet, daß die Schicht aus Eisen mit im Eisen eingelagerten harten Bestandteilen besteht.

2. Kolbenring nach Patentanspruch 1, dadurch gekennzeichnet, daß die harten Bestandteile aus während der galvanischen Eisenabscheidung gebildeten und im Metallgitter des Eisens eingelagerten Eisenhydriden bestehen.

3. Kolbenring nach mindestens einem der Patentansprüche 1 oder 2, dadurch gekennzeichnet, daß die harten Bestandteile aus während der Eisenabscheidung gebildeten und in der Eisenschicht eingelagerten Eisenphosphiden und/oder Boriden bestehen.

4. Kolbenring nach mindestens einem der Patentansprüche 1 bis 3, dadurch gekennzeichnet, daß die abgeschiedene Eisenschicht mit einem oder mehreren der Metalle Molybdän, Wolfram, Kobalt, Nickel, Kupfer, Zink, Zinn und/oder Vanadin legiert ist.

5. Kolbenring nach mindestens einem der Patentansprüche 1 bis 4, dadurch gekennzeichnet, daß die abgeschiedene Eisenschicht eindispergierte Hartstoffteilchen als harte Bestandteile enthält.

6. Kolbenring nach mindestens einem der Patentansprüche 1 bis 5, dadurch gekennzeichnet, daß die abgeschiedene Eisenschicht eindispergierte Festschmierstoffe enthält.
